# EUROPEAN PATENT SPECIFICATION

(11) **EP 2 154 924 B1**
(45) Date of publication and mention of the grant of the patent: **12.03.2014**
(21) Application number: 09167616.3
(22) Date of filing: 11.08.2009
(51) Int. Cl.: H04W 72/04

(54) **Retransmission resource allocation method for wireless communication system**
Neuübertragungsressourcenzuordnungsverfahren für ein drahtloses Kommunikationssystem
Procédé d'attribution de ressources de retransmission pour système de communication sans fil

(30) Priority: 12.08.2008 KR 20080078918
(43) Date of publication of application: 17.02.2010
(60) Divisional application: 14153055.0
(73) Proprietor: Samsung Electronics Co., Ltd., Suwon-si, Gyeonggi-do, 443-742 (KR)
(72) Inventor: Kim, Soeng Hun, Gyeonggi-do (KR); Van Lieshout, Gert-Jan, Gyeonggi-do (KR)
(74) Representative: Grünecker, Kinkeldey, Stockmair & Schwanhäusser

(56) References cited:
- WO-A2-2008/024890
- WO-A2-2009/022855
- EMAIL RAPPORTEUR: "Summary of the email discussion on remaining issues on Semi Persistent Scheduling" 3GPP DRAFT; R2-083144 REMAINING ISSUES IN SEMI PERSISTENT SCHEDULING REV1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Warsaw, Poland; 20080626, 26 June 2008 (2008-06-26), XP050140576 [retrieved on 2008-06-26]

## Description

### BACKGROUND OF THE INVENTION

### 1. Field of the Invention

The present invention generally relates to a wireless communication system and, in particular, to a retransmission resource allocation method and apparatus for a wireless communication system for allocating retransmission resources using a semi-persistent resource allocation message indicating retransmission resource allocation.

### 2. Description of the Related Art

Universal Mobile Telecommunications System (UMTS) is one of the 3rd Generation (3G) mobile telecommunication technologies, which has evolved from Global System for Mobile communications (GSM) and General Packet Radio Services (GPRS) and uses Wideband Code Division Multiple Access (WCDMA).

The 3^{rd} Generation Partnership Project (3GPP), which is responsible for the standardization of UMTS, is working to significantly extend the performance of UMTS through Long Term Evolution (LTE). LTE is a 3GPP standard that provides for a downlink speed of up to 100Mbps and is expected to be commercially launched in 2010. In order to fulfill the requirements for the LTE systems, studies have been performed in various aspects including reducing the number of involved nodes in the connections and placing radio protocol entities as close as to the radio channels.
Particularly, LTE uses per-packet scheduling such that, when transmitting data on an allocated resource, traffic overload occurs on a control channel with scheduling request information and resource allocation information. In order to reduce the control channel signaling, Semi-Persistent Scheduling (SPS) is used. Also, the LATE supports Automatic Repeat reQuest (ARQ) and Hybrid Automatic Repeat reQuest (HARQ) for retransmission of packets.

In general, the base station transmits a "normal resource allocation message" whenever a packet is transmitted as the first HARQ transmission or retransmission. When using the semi-persistent resource allocation, however, the base station allocates the semi-persistent resource in units of a predetermined resource size (e.g., at least one resource block) according to a predefined periodicity, and the user equipment receives the packets on the assigned semi-persistent resource. When the semi-persistent resource is assigned, the assigned resource is implicitly reused according to the periodicity, rather than transmitting the resource allocation message repeatedly.

Therefore, the user equipment stores a value indicating the status of the most recently received packet for discriminating the first transmission and retransmission of a packet, but this process increases the processing complexity of the user equipment. Accordingly, when a semi-persistent resource allocation message transmitted by the base station is missed by an unexpected reason or the semi-persistent resource allocation message is decoded erroneously and a next semi-persistent resource allocation message is received successfully, the user equipment cannot determine whether the currently received semi-persistent resource allocation message is indicative of a semi-persistent resource allocation (or reallocation) or a resource allocation for retransmission using the semi-persistent resource.

US 2008117891 A1 and discloses semi-persistent scheduling in the context of wireless communication providing assignment of resources for spurts of traffic. According to the disclosed method, a user equipment receives a non-persistent or semi-persistent resource assignment and the user equipment may be granted uplink resources on one or more HARQ instances. In response to a request for uplink resources, the user equipment receives a semi-persistent resource assignment.

In a "Summary of the email discussion on remaining issues on Semi Persistent Scheduling", 3GPP Draft, R2-083144 the 3GPP standard is discussed. Particularly, it is disclosed that NDI may be used for separating between transmission and retransmission and that the NDI may be toggled for a new transmission whereas it may be kept the same for dynamic retransmission.

### SUMMARY OF THE INVENTION

In order to address at least the above-mentioned problems and/or disadvantages of the prior art, the present invention provides a retransmission resource allocation for the wireless communication that allocates retransmission resources using a semi-persistent resource allocation message for discriminatively indicating retransmission resource allocation and semi-persistent resource allocation.

The present invention provides a resource allocation method for a mobile terminal in a wireless communication system, comprising: monitoring a Physical Downlink Control Channel (PDCCH); determining, when a downlink message is received on the PDCCH, whether the received message is a semi-persistent resource allocation message using a Semi-Persistent Scheduling Cell Radio Network Temporary Identifier (SPS C-RNTI) of the mobile terminal; considering, when a New Data Indicator (NDI) in the semi-persistent resource allocation message is 1, that the semi-persistent resource allocation message is indicating a retransmission resource; and considering, when the NDI in the semi-persistent resource allocation message is 0, that the semi-persistent resource allocation message is indicating a semi-persistent resource.

Moreover, it is provided a resource allocation method for a base station in a wireless communication system, comprising: setting, when a retransmission resource is allocated to a mobile terminal, a New Data Indicator (NDI) to 1; setting, when a semi-persistent resource is allocated to the mobile terminal, the NDI to 0; generating a semi-persistent resource allocation message comprising the NDI using a Semi-Persistent Scheduling Cell Radio Network Temporary Identifier (SPS C-RNTI) of the mobile terminal; and transmitting the semi-persistent resource allocation message to the mobile terminal on a Physical Downlink Control Channel (PDCCH).

It is, furthermore, provided a resource allocation apparatus of a mobile terminal in a wireless communication system, comprising: a transceiver for receiving data; a Physical Downlink Control Channel (PDCCH) processor for monitoring the PDCCH and for determining, when a downlink message is received on the PDCCH, whether the received message is a semi-persistent resource allocation message using a Semi-Persistent Scheduling Cell Radio Network Temporary Identifier (SPS C-RNTI) of the mobile terminal; and a semi-persistent resource controller for considering, when a New Data Indicator (NDI) in the semi persistent resource allocation message is 1, that the semi-persistent resource allocation message is indicating a retransmission resource and for considering, when the NDI in the semi-persistent resource allocation message is 0, that the semi-persistent resource allocation message is indicating a semi-persistent resource.

It is, furthermore, provided a resource allocation apparatus of a base station in a wireless communication system, comprising: a semi-persistent resource controller for setting, when a retransmission resource is allocated to a mobile terminal, a New Data Indicator (NDI) to 1 and for setting, when a semi-persistent resource is allocated to the mobile terminal, the NDI to 0; a resource allocation message generator for a semi-persistent resource allocation message comprising the NDI using a Semi-Persistent Scheduling Cell Radio Network Temporary Identifier (SPS C-RNTI) of the mobile terminal; and a transceiver for transmitting the semi-persistent resource allocation message to the mobile terminal on a Physical Downlink Control Channel (PDCCH).

### BRIEF DESCRIPTION OF THE DRAWINGS

The above and other objects, features and advantages of the present invention will be more apparent from the following detailed description in conjunction with the accompanying drawings, in which:
FIG. 1 is a schematic diagram illustrating an LATE architecture according to embodiments of the present invention;
FIG. 2 is a diagram illustrating a user plane protocol stack for use in the LTE architecture of FIG. 1;
FIG. 3 is a diagram illustrating a format of a semi-persistent resource allocation message for use in the resource allocation method according to an embodiment of the present invention;
FIG. 4 is a conceptual diagram illustrating a downlink data transmission using a resource allocation method in a mobile communication according to an embodiment of the present invention;
FIG. 5 is a flowchart illustrating a semi-persistent resource allocation procedure of a resource allocation method according to an embodiment of the present invention;
FIG. 6 is a flowchart illustrating a retransmission resource allocation procedure of the resource allocation method according to an embodiment of the present invention;
FIG. 7 is a flowchart illustrating a resource allocation message discrimination procedure of a resource allocation method according to an embodiment of the present invention;
FIG. 8 is a schematic block diagram illustrating a configuration of a mobile terminal according to an embodiment of the present invention; and
FIG. 9 is a schematic block diagram illustrating a configuration of a base station according to an embodiment of the present invention.

### DETAILED DESCRIPTION OF EMBODIMENTS

Embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

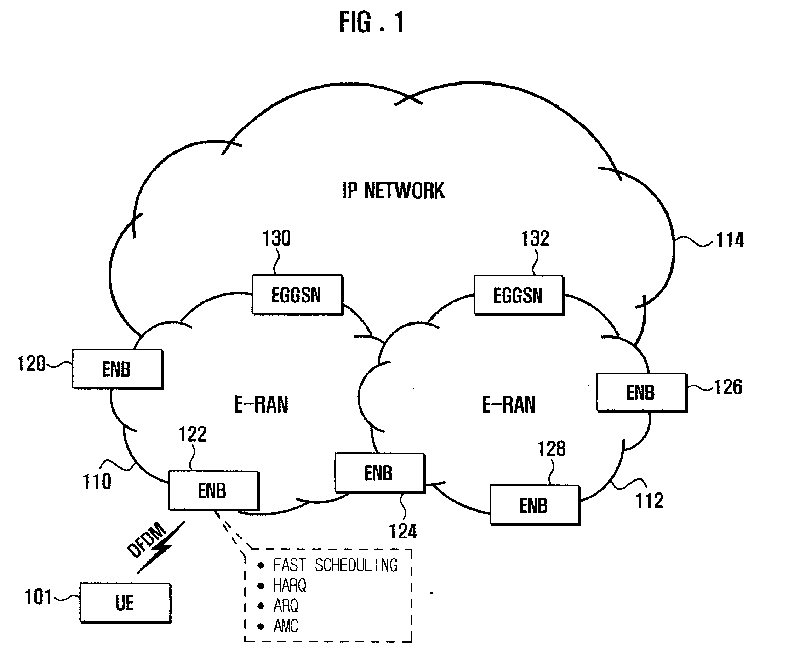

FIG. 1 is a schematic diagram illustrating an LTE architecture to which embodiments of the present invention are applicable.

As shown in FIG. 1, the LTE architecture is characterized with the Evolved Radio Access Network (E-RAN) 110 and 112 having only two infrastructure nodes: the Evolved Node B (hereinafter called ENB or Node B) 120, 122, 124, 126, and 128 and the Access Gateway (AG), i.e. Evolved Gateway GPRS Serving Nodes (EGGSNs) 130 and 132.

A User Equipment (UE) 101 accesses the Internet Protocol (IP) network via the E-RAN 110 and 112.

The ENBs 120, 122, 124, 126, and 128 correspond to the Node B of the UMTS system, which provides the UE 101 with radio access service. The ENBs 120, 122, 124, 126, and 128 are responsible for more complex functions than that of the conventional Node B. In the next generation wireless communication system, all user traffic including real time service such as Voice over IP (VoIP) are served through a shared channel. For this reason, there is a need for a device for managing status information of the UEs and scheduling according to the status information. Each of the ENBs 120, 122, 124, 126, and 128 is responsible for scheduling the UEs. In order to achieve a speed of 100 Mbps or faster, the wireless communication system uses radio access technology based on Orthogonal Frequency Division Multiplexing (OFDM) with a 20 MHz bandwidth. Adaptive Modulation and Coding (AMC) is also adopted for determining a modulation scheme and a channel coding rate according to the channel condition of the UE 101.

Hereinafter, the term "base station" is interchangeably used with "E-RAN" represented, in FIG. 1, by the E-RAN 110 (including the ENBs 120 and 122 and the EGGSN 130). The E-RAN 112 (including the ENBs 126 and 128 and the EGGSN 132) is also referred to as a "base station", and the term "mobile terminal" is interchangeably used with the term "UE", which is represented in FIG. 1 as the UE 101.

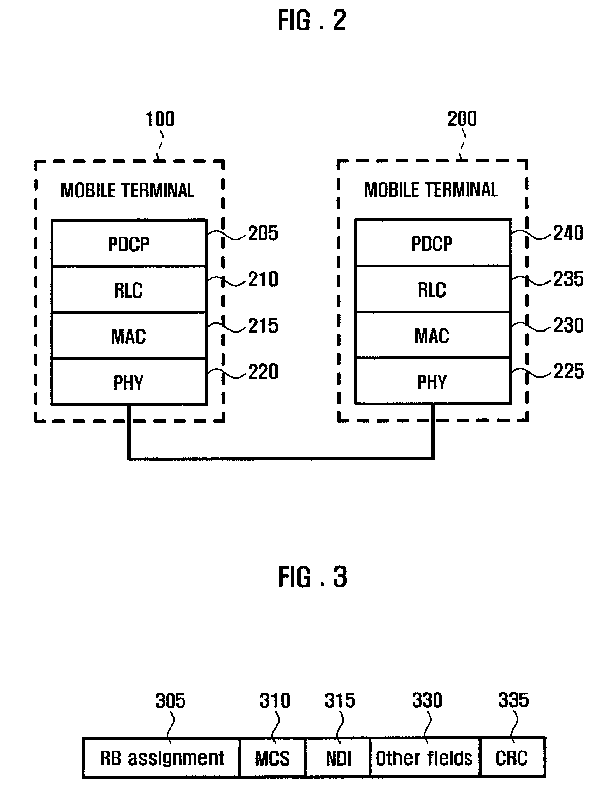

A protocol stack for use in the LATE architecture of FIG. 1 is described hereinafter. FIG. 2 is a diagram illustrating a user plane protocol stack for use in LTE architecture of FIG. 1.

As shown in FIG. 2, the mobile terminal 100 has a protocol stack composed of a Packet Data Convergence Protocol (PDCP) layer 205, a Radio Link Control (RLC) layer 210, a Media Access Control (MAC) layer 215, and a Physical (PHY) layer 220. Also, the base station 200 has a protocol stack composed a PDPC layer 240, a RLC layer 235, a MAC layer 230, and a PHY layer 225.

The PDCP layer 205 and 240 is responsible for IP header compression/decompression. The RLC layer 210 and 235 packs the PDCP Packet Data Units (PDUs) into a size appropriate for transmission and performs an Automatic Repeat reQuest (ARQ) function. The MAC layer 215 and 230 serves multiple RLC layer entities and multiplexes the RLC PDUs into a MAC PDU and de-multiplexes a MAC PDU into the RLC PDUs. The physical layer 220 and 225 performs encoding and modulation on the upper layer data to transmit through a radio channel and performs demodulation and decoding on the OFDM symbol received through radio channel to deliver to upper layers.

In the LTE system, HARQ is used to enhance data reliability. According to an embodiment of the present invention, one of the base station 200 and the UE can be a transmitter and the other of the base station 200 and the UE can be a receiver. When the receiver fails to receive a packet (e.g., a MAC PDU) transmitted by the transmitter, the receiver transmits a Negative ACLnowledge (NACK) and the transmitter, upon receiving the NACK, retransmits the packet. The receiver performs soft combining on the retransmitted packet and the previously received packet to improve data reliability.

In wireless communication according to an embodiment of the present invention, services can be provided in a completely IP-based and packet-based manner. For example, the voice communication service can be served as a packet-based service rather than circuit-switched service. In case of Voice over IP (VoIP), the traffic is characterized by small packet sizes with periodicity. For instance, when the VoIP service is provided in 12.2 Kbps Adaptive Multi-Rate (AMR) codec mode, VoIP packets having about 35-byte size are created every 20 msecs. Accordingly, in order to support the VoIP service with a normal scheduling scheme, the transmitter and receiver must exchange scheduling request messages and uplink resource allocation message whenever the VoIP packet is generated.

The base station 200 allocates semi-persistent resources to the mobile terminal 100 in order to reduce the control information overhead caused by the frequently transmitted scheduling requests and uplink resource allocation messages. This technique for reducing the control channel signaling by allocating semi-persistent resource is called Semi-Persistent resource Scheduling (SPS).

In case of normal resource allocation for the HARQ operation, the base station 200 transmits a resource allocation message whenever a packet to be transmitted is generated. However, when a semi-persistent resource (e.g., one or more resource blocks) is allocated for the HARQ operation, the resource is implicitly reused until a semi-persistent resource allocation message is transmitted. The mobile terminal 100 assumes a downlink transmission according to the semi-persistent resources that the UE has allocated and receives packets on the semi-persistent resources. Accordingly, the base station 200 does not need to transmit a semi-persistent resource allocation message when transmitting the packet using the semi-persistent resources allocated to the mobile terminal 100 but retransmission of the packet.

However, when the semi-persistent resource allocation message is missed, due to an unexpected reason, or decoded erroneously at the mobile terminal 100, and then a next semi-persistent resource allocation message is received successfully, the mobile terminal 100 cannot determine whether the currently received semi-persistent resource allocation message indicates a semi-persistent resource allocation (or reallocation), or determine whether the received semi-persistent resource allocation message indicates a resource allocation for retransmission of a packet using the semi-persistent resource.

According to embodiments of the present invention, the UE can determine whether a semi-persistent resource allocation message indicates a semi-persistent resource allocation or a resource allocation for retransmitting a packet using the semi-persistent resource. A message structure for use in the resource allocation method according to embodiments of the present invention is described hereinafter. FIG. 3 is a diagram illustrating a format of a semi-persistent resource allocation message for use in the resource allocation method according to an embodiment of the present invention.

Referring to FIG. 3, the semi-persistent resource allocation message includes a Resource Block (RB) assignment field 305, a Modulation and Coding Scheme (MCS) field 310, a New Data Indicator (NDI) field 315, and a Cyclic Redundancy Check (CRC) field 335. The reference numeral 330 denotes other fields, which may include a HARQ process number field. In order to avoid unnecessarily obscuring the present invention, detailed descriptions of the other fields are omitted.

The RB assignment field 305 contains the information on the amount and location of the resources assigned to the mobile terminal 100. The resource is allocated in units of Resource Blocks (RBs), which are 1 msec in duration, and consist of a predetermined number of subcarriers. At least one resource block is assigned is assigned by the RB assignment field 305. The at least one allocated resource block is a "transmission resource".

The MCS field contains information on the modulation level and channel coding rate adopted for transmission data. The MCS is 5 bits long and a code point represents a combination of a modulation scheme and channel coding rate. For instance, the MCS field 310 can indicate one of 32 code points including a pair a Quadrature Phase-Shift Keying (QPSK) (modulation scheme) and 0.11 (coding rate) to a 64 Quadrature Amplitude Modulation (QAM) and 0.95.

The NDI field 315 is 1 bit long and used for indicating whether the resource allocation message indicates a semi-persistent resource allocation or a retransmission of a packet that has not been transmitted (or received). In an embodiment of the present invention, the NDI is set to "0" to indicate the semi-persistent resource allocation, or set to "1" to indicate the resource allocation for retransmission of a packet using the semi-persistent resource.

The NDI field 315 contains information for identifying the semi-persistent resource allocation messages indicating semi-persistent resource allocation and resource allocation for retransmission of a packet using the semi-persistent resource. The UE can determine, based on the NDI value, whether the semi-persistent resource allocation message indicates a semi-persistent resource allocation or a resource allocation for retransmission of a packet, using the semi-persistent resource.

The NDI is a flag that is set to "0" for indicating semi-persistent resource allocation and set to "1" for indicating retransmission resource allocation. A Ithough, according to an embodiment of the present invention, the NDI is defined as a flag for carrying "usage information" of the semi-persistent resource allocation message, the NDI is not limited thereto. For convenience, the terms "NDI value" and "NDI information" contained in the NDI field 315 are interchangeable with "usage information".

The CRC field 325 carries a CRC value calculated for the information contained in the resource allocation message and a SPS Cell Radio Network Temporary Identifier (SPS C-RNTI). The SPS C-RNTI is an identifier for the mobile terminal 100 for determining whether the semi-persistent resource allocation message is intended for the mobile terminal 100. Also, the SPS C-RNTI can be used for identifying the normal resource allocation message and the semi-persistent resource allocation message. Typically, the normal resource allocation message has a C-RNTI.

The base station 200 can transmit resource allocation messages for allocating resource to the mobile terminal 100. The resource allocation messages can be classified into "semi-persistent resource allocation messages" and "normal resource allocation messages". The mobile terminal 100 can identify semi-persistent resource allocation messages by a CRC calculation.

More specifically, the normal message and semi-persistent resource allocation message can be identified depending on whether the message carries a C-RNTI or a SPS C-RNTI. C-RNTIs are carried by normal messages, and SPS C-RNTIs are carried by semi-persistent resource allocation messages. SPS C-RNTIs have a value for identifying a specific mobile terminal 100. Accordingly, the base station 200 transmits an SPS C-RNTI to the mobile terminal 100 in a call establishment process.

When transmitting a semi-persistent resource allocation message to the mobile terminal 100, the base station 200 applies an SPS C-RNTI masking to the semi-persistent resource allocation message, performs a CRC calculation, and inserts the calculation result into the CRC field 525.

If the semi-persistent resource allocation message is received, the mobile terminal 100 applies a masking of the SPS C-RNTI received in the call establishment process to the received semi-persistent resource allocation message and performs CRC. If the CRC result matches the result calculated previously, the mobile terminal 100 determines that the semi-persistent resource allocation message intended for the mobile terminal 100 has been successfully received. This means that the semi-persistent resource allocation message has passed the CRC test.

Once a message passes the CRC test with the C-RNTI, the mobile terminal 100 determines that a normal message intended for the mobile terminal 100 has been successfully received.

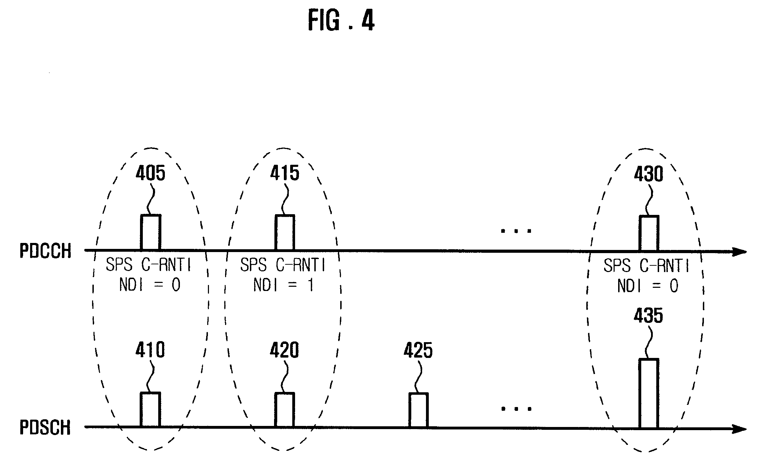

The resource allocation method using a semi-persistent resource allocation message is described hereinafter in more detail. FIG. 4 is a conceptual diagram illustrating a downlink data transmission using a resource allocation method in a mobile communication according to an embodiment of the present invention.

As shown in FIG. 4, a Physical Downlink Control Channel (PDCCH) and a Physical Downlink Shared Channel (PDSCH) are used for downlink transmission. The base station 200 transmits the semi-persistent resource allocation message on the PDCCH and data on the PDSCH. The mobile terminal 100 locates the semi-persistent resource based on the RB assignment information indicated by the semi-persistent resource allocation message. and the mobile terminal 100 further receives the packets by decoding the semi-persistent resource located on the PDSCH according to the MCS indicated by the semi-persistent resource allocation message. In FIG. 4, reference numbers 405, 415, and 430 denote semi-persistent resource allocation messages, and reference numbers 410, 420, 425, and 435 denote packets.

The base station 200 transmits a semi-persistent resource allocation message 405 at a time point for assigning a semi-persistent resource to the mobile terminal 100.

The base station 200 inserts a CRC calculation result into the CRC field 335 of the semi-persistent resource allocation message 405. The CRC calculation is performed with the SPS C-RNTI of the mobile terminal 100. The base station 200 also sets the NDI value contained in the NDI field 315 to "0."

If the semi-persistent resource allocation message 405 is received, the mobile terminal 100 verifies the semi-persistent resource allocation message 405 by referencing the NDI value, which is set to "0." The mobile terminal 100 locates the semi-persistent resource on the PDSCH and receives the packets 410 and 425 transmitted periodically in the semi-persistent resource that the mobile terminal 100 has been assigned.

The mobile terminal 100 performs CRC test on every packet. In FIG. 4 it is assumed that the first packet 410 fails the CRC test. In this case, the mobile terminal 100 transmits a HARQ NACK to the base station 200.

Upon receiving of the HARQ NACK, the base station 200 retransmits the erroneous packet using the semi-persistent resource assigned to the mobile terminal 100. The base station 200 generates a semi-persistent resource allocation message 415 having a CRC containing the CRC result calculated with the SPS C-RNTI of the mobile terminal 100 and NDI set to "1," which indicates that the retransmission resource allocation uses the semi-persistent resource.

If the semi-persistent resource allocation message 415 is received, then the mobile terminal 100 verifies the semi-persistent resource allocation message intended for the mobile terminal 100 based on the result of the CRC test, and checks the NDI field 315 of the semi-persistent resource allocation message. The mobile terminal 100 determines, by referencing to the NDI set to "1," that the semi-persistent resource allocation message 415 indicates that the retransmission resource allocation uses the semi-persistent resource. Once it is determined that the semi-persistent resource allocation message 415 indicates retransmission resource allocation, the mobile terminal 100 locates the retransmission resource based on the RB assignment information contained in the RB assignment field of the semi-persistent resource allocation message 415 and receives the retransmitted packet 420 in the retransmission resource. Next, the mobile terminal 100 performs HARQ soft while combining the retransmitted packet 420 with the previously received packet 410.

If the base station 200 changes the semi-persistent resource assigned to the mobile terminal 100, the base station 200 transmits a semi-persistent resource allocation message 430 indicating a semi-persistent resource allocation to the mobile terminal 100.

The semi-persistent resource allocation message 430 includes CRC field 335 containing a CRC result calculated with the SPS C-RNTI of the mobile terminal 100 and the NDI field 315 containing NDI value set to "0," in order to indicate that the semi-persistent resource allocation message indicates the semi-persistent resource allocation.

If the semi-persistent resource allocation message 430 is received, then the mobile terminal 100 verifies the semi-persistent resource allocation message according to the positive result of the CRC test and determines, by referencing the NDI value that is set to "0," that the semi-persistent resource allocation message indicates the semi-persistent resource allocation. Accordingly, the mobile terminal 100 locates the semi-persistent resource indicated by the RB assignment information contained in the RB assignment field of the semi-persistent resource allocation message and receives the first packets 435 transmitted periodically in the semi-persistent resource allocated to the mobile terminal 100.

As described above, the mobile terminal can discriminate the semi-persistent resource allocation messages indicating retransmission resource allocation and semi-persistent resource allocation accurately, based on the value of the NDI contained in the NDI field 315 of the semi-persistent resource allocation message.

Since the semi-persistent resource allocation messages indicate retransmission resource allocation and semi-persistent resource allocation can be determined with the NDI value, the resource allocation method negates the need for supplementary information such as "NDI_LATEST" that is updated for indicating whether the packet is a first packet or a retransmitted packet, in which enhances signaling reliability and system efficiency.

The resource allocation method of the present invention is described hereinafter in more detail. As described above, the semi-persistent resource allocation message can be used for allocating a semi-persistent resource and a retransmission resource using the semi-persistent resource to the mobile terminal 100.

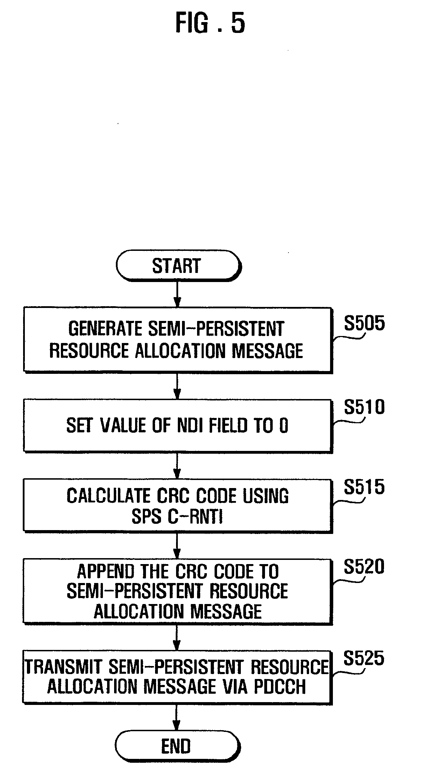

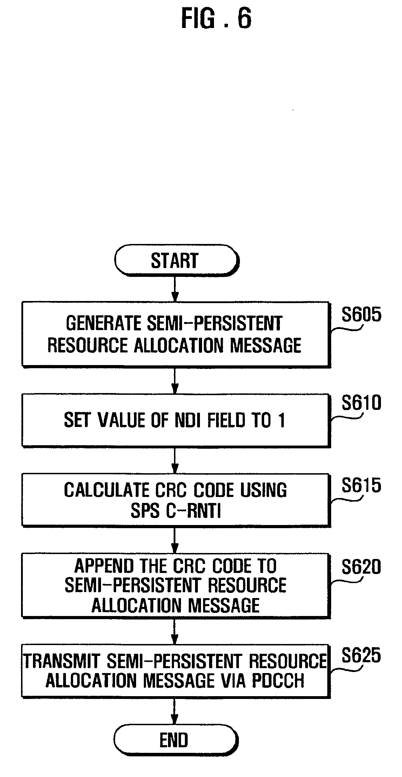

FIG. 5 is a flowchart illustrating a semi-persistent resource allocation procedure of a resource allocation method according to an embodiment of the present invention, and FIG. 6 is a flowchart illustrating a retransmission resource allocation procedure of the resource allocation method according to an embodiment of the present invention.

According to an embodiment of the present invention, the base station determines whether to transmit a semi-persistent resource allocation message indicating a semi-persistent resource allocation or a semi-persistent resource allocation message indicative of retransmission resource allocation using the semi-persistent resource.

When transmitting the semi-persistent resource allocation message indicating a semi-persistent resource allocation, the base station performs the semi-persistent resource allocation procedure depicted in FIG. 5. Otherwise, when transmitting the semi-persistent resource allocation message indicating a retransmission resource allocation using the semi-persistent resource, the base station performs the retransmission resource allocation procedure depicted in FIG. 6.

Referring to FIG. 5, in order to allocate a semi-persistent resource, the base station 200 first creates a semi-persistent resource allocation message based on the information on the semi-persistent resource to be allocated to the mobile terminal 100, in step 505. Here, the information on the semi-persistent resource assigned to the mobile terminal 100 is specified in the RB assignment field 305 of the semi-persistent resource allocation message.

Next, the base station 200 sets the NDI value contained in the NDI field 315 of the semi-persistent resource message to "0," in step 510.

Next, the base station 200 calculates a CRC code with the SPS C-RNTI of the mobile terminal 100, in step 515. The CRC code calculated with the SPS C-RNTI can be used to identify the normal resource allocation message and the semi-persistent resource allocation message.

Next, the base station 200 inserts the CRC code into the CRC field 335 of the semi-persistent resource allocation message, in step 520.

Consequently, the base station 200 transmits the semi-persistent resource allocation message to the mobile terminal 100 via a PDCCH.

As described above with reference to FIG. 5, the base station 200 sets the NDI value contained in the NDI field 315 of the semi-persistent resource allocation message to "0," so as to inform the mobile terminal 100 that semi-persistent resource allocation message is indicative of semi-persistent resource allocation.

A procedure for allocating a retransmission resource using the semi-persistent resource allocated to the mobile terminal 100 is described hereinafter with reference to FIG. 6.

When a HARQ NACK message is received, the base station allocates a retransmission resource for retransmitting the packet indicated by the HARQ NACK message.

Referring to FIG. 6, in order to allocate a retransmission resource using the semi-persistent resource allocated to the mobile terminal 100, the base station 200 creates a semi-persistent resource allocation message based on the information on the retransmission resource to be allocated to the mobile terminal 100, in step 650. Here, the information on the retransmission resource assigned to the mobile terminal 100 is specified in the RB assignment field 305 of the semi-persistent resource allocation message.

Next, the base station 200 sets the NDI value contained in the NDI field 315 of the semi-persistent resource allocation message to "1," in step 610.

Next, the base station 200 calculates a CRC code with the SPS C-RNTI of the mobile terminal 100, in step 615. The CRC code calculated with the SPS C-RNTI allows the mobile terminal 100 to distinguish the semi-persistent resource allocation message from the normal resource allocation message.

Next, the base station 200 inserts the CRC code into the CRC field 335 of the semi-persistent resource allocation message, in step 620.

Consequently, the base station 200 transmits the semi-persistent resource allocation message to the mobile terminal 100 via a PDCCH.

As described above with reference to FIG. 6, the base station 200 sets the NDI value contained in the NDI field 315 of the semi-persistent resource allocation message to "1," so as to inform the mobile terminal 100 that semi-persistent resource allocation message indicates a retransmission resource allocation.

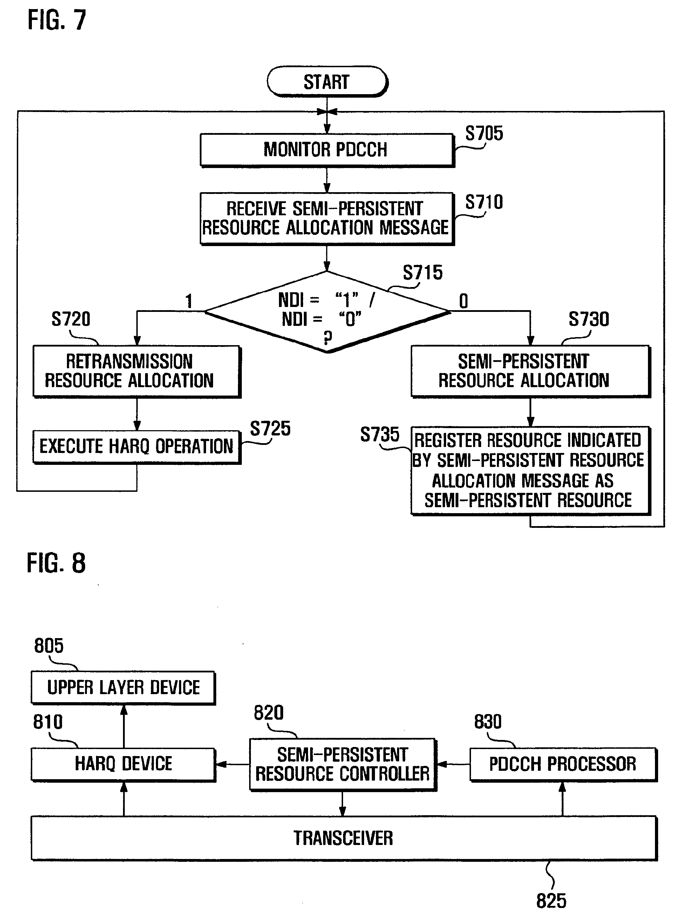

The operations of the mobile terminal 100 received the semi-persistent resource allocation message are described hereinafter in detail. FIG. 7 is a flowchart illustrating a resource allocation message discrimination procedure of a resource allocation method according to an embodiment of the present invention.

In FIG. 7, it is assumed that the mobile terminal 100 has received a C-RNTI and a SPS C-RNTI in the call establishment procedure with the base station 200.

Referring to FIG. 7, the mobile terminal 100 monitors the PDCCH, in step 705. When a downlink message is received on the PDCCH, the mobile terminal 100 calculates the CRC code with the C-RNTI and SPS C-RNTI and compares the calculated CRC code with the one received from the base station to determine whether the message is intended for the mobile terminal 100.

At this time, the mobile terminal 100 determines whether the message is a normal resource allocation message or a semi-persistent resource allocation message according to whether the message has passed the CRC test with the C-RNTI or the SPS C-RNTI. In FIG. 7, it is assumed that the message has passed the CRC test with the SPS C-RNTI. This means the received message is a semi-persistent resource allocation message. The mobile terminal 100 receives the semi-persistent resource allocation message, in step 710, and checks the NDI field of the semi-persistent resource allocation message to determine whether the semi-persistent resource allocation message indicates a semi-persistent resource allocation or a retransmission resource allocation, in step 715.

As described above, the CRC calculation is performed on the received message with a masking of the SPS C-RNTI of the mobile station 100. If the CRC code obtained from the CRC calculation is compared with the CRC code received from the base station, the CRC success.

If the NDI value is set to "1" in step 715, the mobile terminal 100 determines that the semi-persistent resource allocation message indicates a retransmission resource allocation, in step 720. Otherwise, if the NDI value is set to "0," the mobile terminal 100 determines that the semi-persistent resource allocation message indicates a semi-persistent resource allocation, in step 730.

If it is determined that the semi-persistent resource allocation message indicates a retransmission resource allocation, the mobile terminal 100 receives the packet retransmitted in the resource of the PDSCH that is indicated by the RB assignment information of the semi-persistent resource allocation message, and soft-combines the packet stored in the HARQ buffer with the retransmitted packet in the HARQ process.

Otherwise, if it is determined that the semi-persistent resource allocation message indicates a semi-persistent resource allocation, the mobile terminal 100 locates the semi-persistent resource indicated by the semi-persistent resource allocation message. The mobile terminal 100 checks the information contained the RB assignment field 305 of the semi-persistent resource allocation message indicating the semi-persistent resource allocation and registers the resource indicated by the RB assignment information as the semi-persistent resource allocated to the mobile terminal 100. When a semi-persistent resource was previously allocated, the mobile terminal 100 changes the previous semi-persistent resource to the newly allocated semi-persistent resource.

A structure of a mobile terminal 100 for implementing the above described resource allocation method is described hereinafter. FIG. 8 is a schematic block diagram illustrating a configuration of a mobile terminal according to an embodiment of the present invention.

Referring to FIG. 8, the mobile terminal 100 according to an embodiment of the present invention includes an upper layer device 805, an HARQ device 810, an SPS resource controller 820, a transceiver 825, and a PDCCH processor 830.

The transceiver 825 is responsible for transmitting and receiving radio signal carrying data. Particularly, the transceiver 825 receives data (control information) through the PDCCH. Once the data is received through the PDCCH, the transceiver 825 decodes the resource allocated to the mobile terminal on the PDCCH into data and delivers the decoded data to the PDCCH processor 830. Here, the data includes a semi-persistent resource allocation message.

Once the decoded data is delivered from the transceiver 825, the PDCCH processor 830 performs a CRC test on the semi-persistent resource allocation message with a masking of the SPS C-RNTI of the mobile terminal. The SPS C-RNTI is a dynamic UE identifier allocated by a serving base station. According to an embodiment of the present invention, the SPS C-RNTI is also used for determining whether the message message is a normal resource allocation message or a semi-persistent resource allocation message. If the data passes the CRC test with the SPS C-RNTI, the PDCCH processor determines that the data is a semi-persistent resource allocation message intended for the mobile terminal 100, and sends the semi-persistent resource allocation message to the SPS resource controller 820.

The SPS resource controller 820 checks the NDI field 315 of the semi-persistent resource allocation message received from the PDCCH processor 830 and determines whether the semi-persistent resource allocation message indicates a semi-persistent resource allocation or a retransmission resource allocation on the basis of the NDI value contained in the NDI field 315.

For instance, if the NDI value is set to "1," the SPS resource controller 820 determines that the semi-persistent resource allocation message indicates a retransmission resource allocation. In this case, the SPS resource controller 820 controls the HARQ device 810 to combine the packet received in the resource allocated on the PDSCH by the semi-persistent resource allocation message indicative of retransmission resource allocation with the previously received packet stored in the HARQ buffer.

Otherwise, if the NDI value is set to "0," the SPS resource controller 820 determines that the semi-persistent resource allocation message indicates a semi-persistent resource allocation. In this case, SPS resource controller 820 registers the semi-persistent resource indicated by the semi-persistent resource allocation message. The mobile terminal 100 locates the semi-persistent resource indicated by the RB assignment field 305 of the semi-persistent resource allocation message and decodes the semi-persistent resources on the PDSCH(s), since the semi-persistent resource allocation message has been received. When the semi-persistent resource has been previously allocated, the SPS resource controller 820 replaces the previously allocated semi-persistent resource with the newly allocated semi-persistent resource. Accordingly, the mobile terminal decodes the newly allocates semi-persistent resource on the PDSCH(s) to receive packets.

The HARQ device 810 includes a plurality of HARQ processors that are operating in individual HARQ processes, respectively. Each HARQ processor performs HARQ operations to request retransmission of packet and soft combining on the retransmitted packet and the previously received packet stored in the corresponding HARQ buffer.

The upper layer device 805 includes at least one of Radio Link Control (RLC) device, Packet Data Convergence Protocol (PDCP) device, and Media Access Control (MAC) device. The PDCP device is responsible for compressing/decompressing IP header, the RLC device formats the PDCP PDUs in size appropriate for transporting, and the MAC device multiplexes and demultiplexes MAC PDUs.

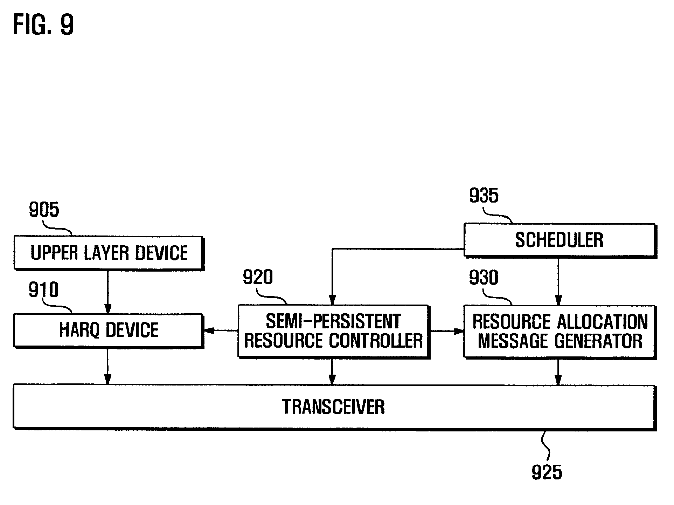

A structure of a base station 200 for preferably implementing the above described resource allocation method is described hereinafter with reference to FIG. 9. FIG. 9 is a schematic block diagram illustrating a configuration of a base station according to an embodiment of the present invention.

The base station according to an embodiment of the present invention includes an upper layer device 905, an HARQ device 910, a transceiver 925, an SPS resource controller 920, resource allocation message generator 930, and a scheduler 935.

The transceiver 925 is responsible for transmitting and receiving radio signal carrying data. Particularly, the transceiver 925 transmits data (control information) on the PDCCH. The data include a semi-persistent resource allocation message.

The resource allocation message generator 930 generates a semi-persistent resource allocation message and delivers the semi-persistent resource allocation message to the transceiver 925 under the control of the scheduler 935 and the SPS resource controller 920.

The scheduler 935 allocates resources to the mobile terminal 100 in consideration of the amount, type, and usage of the data to be transmitted to the mobile terminal 100. Particularly, according to the embodiment of the present invention illustrated in FIG. 9, the scheduler 935 can allocate resources to mobile terminals in normal resource scheduling manner and semi-persistent resource scheduling manner. The scheduler 935 controls the resource allocation message generator 930 to generate a resource allocation message according to the types of identifiers and the usages of the resources to be allocated to the mobile terminals. When the semi-persistent resource allocation or the retransmission resource allocation using the semi-persistent resource is required, the scheduler 935 notifies the semi-persistent resource controller 920.

If the scheduler 935 issues a notice of a semi-persistent resource allocation, the semi-persistent resource controller 920 controls the resource allocation message generator 930 to set the NDI value contained in the NDI field 315 of the semi-persistent resource allocation message to "0." The semi-persistent resource controller 920 also controls the transceiver 925 to transmit the packet using the semi-persistent resource allocated to the mobile terminal 100 on the PDSCH.

If the scheduler 935 issues a notice of a retransmission resource allocation using the semi-persistent resource, the semi-persistent resource controller 920 controls the resource allocation message generator 930 to set the NDI value contained in the NDI field 315 of the semi-persistent resource allocation message to "1." The semi-persistent resource controller 920 also controls the transceiver 925 to retransmit the packet requested by the mobile terminal using the semi-persistent resource allocated on the PDSCH.

The semi-persistent resource controller 920 controls the resource allocation message generator 930 to set the NDI carried by the semi-persistent resource allocation message to "0" or "1," according to whether the resource allocation is a semi-persistent resource allocation or a retransmission resource allocation using the semi-persistent resource.

The semi-persistent resource controller 920 calculates a CRC code with the SPS C-RNTI of the mobile terminal to allocate the semi-persistent resource and inserts the calculated CRC code into the CRC field 335.

The HARQ device 910 includes a plurality of HARQ processors that are operating in individual HARQ processes, respectively. Each HARQ processor performs HARQ operations to request retransmission of a packet and soft combining on the retransmitted packet and the previously received packet stored in the corresponding HARQ buffer.

The upper layer device 905 includes at least one of Radio Link Control (RLC) device, Packet Data Convergence Protocol (PDCP) device, and Media Access Control (MAC) device. The PDCP device is responsible for compressing/decompressing IP header, the RLC device formats the PDCP PDUs in size appropriate for transporting, and the MAC device multiplexes and demultiplexes MAC PDUs.

As described above, the resource allocation method for a wireless communication system according to the present invention uses a semi-persistent resource allocation message having usage information that indicates whether the semi-persistent resource allocation message is indicative of semi-persistent resource allocation or retransmission resource allocation using the semi-persistent resource, thereby enhancing the reliability of retransmission using the semi-persistent resource. Also, the resource allocation method of the present invention enables the mobile terminal to check the resource allocation for retransmission without recording the status of packet, thereby reducing processing complexity of the mobile terminal.

Although embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

## Claims

1. A resource allocation method for a mobile terminal in a wireless communication system, comprising:
monitoring a Physical Downlink Control Channel, PDCCH,
determining, when a downlink message is received on the PDCCH, whether the received message is a semi-persistent resource allocation message using a Semi-Persistent Scheduling Cell Radio Network Temporary Identifier, SPS C-RNTI of the mobile terminal;
**characterized by**
considering, when a New Data Indicator, NDI, in the semi-persistent resource allocation message is 1, that the semi-persistent resource allocation message is indicating a retransmission resource; and
considering, when the NDI in the semi-persistent resource allocation message is 0, that the semi-persistent resource allocation message is indicating a semi-persistent resource.

2. The resource allocation method of claim 1, wherein the determining whether the received message is the semi-persistent resource allocation message comprises:
performing a Cyclic Redundancy Check, CRC, test on the received message with the SPS C-RNTI.

3. The resource allocation method of claim 2, wherein the determining whether the received message is the semi-persistent resource allocation message further comprises:
determining, when the received message passes the CRC test, that the received message is the semi-persistent resource allocation message.

4. The resource allocation method of claim 1, wherein the semi-persistent resource allocation message further comprises a resource assignment information on the retransmission resource or the semi-persistent resource.

5. A resource allocation method for a base station in a wireless communication system, comprising:
setting, when a retransmission resource is allocated to a mobile terminal, a New Data Indicator, NDI, to 1;
setting, when a semi-persistent resource is allocated to the mobile terminal, the NDI to 0;
generating a semi-persistent resource allocation message comprising the NDI using a Semi-Persistent Scheduling Cell Radio Network Temporary Identifier, SPS C-RNTI, of the mobile terminal; and
transmitting the semi-persistent resource allocation message to the mobile terminal on a Physical Downlink Control Channel, PDCCH.

6. The resource allocation method of claims 5, wherein the semi-persistent resource allocation message further comprises a Cyclic Redundancy Check, CRC, code calculated with the SPS C-RNTI.

7. The resource allocation method of claim 5, wherein the semi-persistent resource allocation message further comprises a resource assignment information on the retransmission resource or the semi-persistent resource.

8. A resource allocation apparatus of a mobile terminal in a wireless communication system, comprising:
a transceiver (825; 925) for receiving data;
a Physical Downlink Control Channel, PDCCH, processor (830) for monitoring the PDCCH and for determining, when a downlink message is received on the PDCCH, whether the received message is a semi-persistent resource allocation message using a Semi-Persistent Scheduling Cell Radio Network Temporary Identifier, SPS C-RNTI, of the mobile terminal; and
**characterized by**
a semi-persistent resource controller (820; 920) for considering, when a New Data Indicator, NDI, in the semi persistent resource allocation message is 1, that the semi-persistent resource allocation message is indicating a retransmission resource and for considering, when the NDI in the semi-persistent resource allocation message is 0, that the semi-persistent resource allocation message is indicating a semi-persistent resource.

9. The resource allocation apparatus of claim 8, wherein the PDCCH processor (830) performs a Cyclic Redundancy Check, CRC, test on the received message with the SPS C-RNTI.

10. The resource allocation apparatus of claim 9, wherein the PDCCH processor (830) determines that the received message is the semi-persistent resource allocation message when the received message passes the CRC test.

11. The resource allocation apparatus of claim 8, wherein the semi-persistent resource allocation message further comprises a resource assignment information on the retransmission resource or the semi-persistent resource.

12. A resource allocation apparatus of a base station in a wireless communication system, comprising:
a semi-persistent resource controller (820; 920) for setting, when a retransmission resource is allocated to a mobile terminal, a New Data Indicator, NDI, to 1 and for setting, when a semi-persistent resource is allocated to the mobile terminal, the NDI to 0;
a resource allocation message generator (930) for a semi-persistent resource allocation message comprising the NDI using a Semi-Persistent Scheduling Cell Radio Network Temporary Identifier, SPS C-RNTI, of the mobile terminal; and
a transceiver (825; 925) for transmitting the semi-persistent resource allocation message to the mobile terminal on a Physical Downlink Control Channel, PDCCH.

13. The resource allocation apparatus of claim 12, wherein the semi-persistent resource allocation message further comprises a Cyclic Redundancy Check, CRC, code calculated with the SPS C-RNTI.

14. The resource allocation apparatus of claim 12, wherein the semi-persistent resource allocation message further comprises a resource assignment information on the retransmission resource or the semi-persistent resource.

## Patentansprüche

1. Ressourcenzuweisungsverfahren für ein mobiles Endgerät in einem drahtlosen Kommunikationssystem, umfassend:
Überwachen eines physikalischen Downlink-Steuerkanals (Physical Downlink Control Channel), PDCCH;
Ermitteln, wenn eine Downlink-Nachricht auf dem PDCCH empfangen wird, ob die empfangene Nachricht eine Nachricht zur semi-persistenten Ressourcenzuweisung ist, unter Verwendung einer temporären, semi-persistenten Planung-Zellenfunknetzkennung (Semi-Persistent Scheduling Cell Radio Network Temporary Identifier), SPS C-RNTI, des mobilen Endgeräts;
**gekennzeichnet durch**
Berücksichten, dass die Nachricht zur semi-persistenten Ressourcenzuweisung eine Ressource zur Sendewiederholung kennzeichnet, wenn ein Indikator für neue Daten (New Data Indicator), NDI, in der Nachricht zur semi-persistenten Ressourcenzuweisung 1 ist; und
Berücksichtigen, dass die Nachricht zur semi-persistenten Ressourcenzuweisung eine semi-persistente Ressource kennzeichnet, wenn der NDI in der Nachricht zur semi-persistenten Ressourcenzuweisung 0 ist.

2. Ressourcenzuweisungsverfahren nach Anspruch 1, wobei das Ermitteln, ob die empfangene Nachricht die Nachricht zur semi-persistenten Ressourcenzuweisung ist, umfasst:
Durchführen eines Tests zur zyklischen Redundanzprüfung (Cyclic Redundancy Check), CRC, an der empfangenen Nachricht mit der SPS C-RNTI.

3. Ressourcenzuweisungsverfahren nach Anspruch 2, wobei das Ermitteln, ob die empfangene Nachricht die Nachricht zur semi-persistenten Ressourcenzuweisung ist, weiterhin umfasst:
Bestimmen, dass die empfangene Nachricht die Nachricht zur semi-persistenten Ressourcenzuweisung ist, wenn die empfangene Nachricht den CRC-Test besteht.

4. Ressourcenzuweisungsverfahren nach Anspruch 1, wobei die Nachricht zur semi-persistenten Ressourcenzuweisung weiterhin eine Ressourcenzuordnungsinformation zu der Ressource zur Sendewiederholung oder der semi-persistenten Ressource umfasst.

5. Ressourcenzuweisungsverfahren für eine Basisstation in einem drahtlosen Kommunikationssystem, umfassend:
Setzen eines Indikators für neue Daten (New Data Indicator), NDI, auf 1, wenn eine Ressource zur Sendewiederholung einem mobilen Endgerät zugewiesen wird;
Setzen des NDI auf 0, wenn eine semi-persistente Ressource dem mobilen Endgerät zugewiesen wird;
Erzeugen einer Nachricht zur semi-persistenten Ressourcenzuweisung, die den NDI umfasst, unter Verwendung einer temporären, semi-persistenten Planung-Zellenfunknetzkennung (Semi-Persistent Scheduling Cell Radio Network Temporary Identifier), SPS C-RNTI, des mobilen Endgeräts; und
Senden der Nachricht zur semi-persistenten Ressourcenzuweisung an das mobile Endgerät auf einem physikalischen Downlink-Steuerkanal (Physical Downlink Control Channel), PDCCH.

6. Ressourcenzuweisungsverfahren nach Anspruch 5, wobei die Nachricht zur semi-persistenten Ressourcenzuweisung weiterhin einen Code einer zyklischen Redundanzprüfung (Cyclic Redundancy Check), CRC, der mit der SPS C-RNTI berechnet wird, umfasst.

7. Ressourcenzuweisungsverfahren nach Anspruch 5, wobei die Nachricht zur semi-persistenten Ressourcenzuweisung weiterhin eine Ressourcenzuordnungsinformation zu der Ressource zur Sendewiederholung oder der semi-persistenten Ressource umfasst.

8. Ressourcenzuweisungsvorrichtung eines mobilen Endgeräts in einem drahtlosen Kommunikationssystem, umfassend:
einen Sendeempfänger (825; 925) zum Empfangen von Daten;
einen Prozessor für einen physikalischen Downlink-Steuerkanal (Physical Downlink Control Channel), PDCCH, (830) zum Überwachen des PDCCH und zum Ermitteln, wenn eine Downlink-Nachricht auf dem PDCCH empfangen wird, ob die empfangene Nachricht eine Nachricht zur semi-persistenten Ressourcenzuweisung ist, unter Verwendung einer temporären, semi-persistenten Planung-Zellenfunknetzkennung (Semi-Persistent Scheduling Cell Radio Network Temporary Identifier), SPS C-RNTI, des mobilen Endgeräts; und
**gekennzeichnet durch**
einen Controller für semi-persistente Ressourcen (820; 920) zur Berücksichtigung, dass die Nachricht zur semi-persistenten Ressourcenzuweisung eine Ressource zur Sendewiederholung kennzeichnet, wenn ein Indikator für neue Daten (New Data Indicator), NDI, in der Nachricht zur semi-persistenten Ressourcenzuweisung 1 ist, und zur Berücksichtigung, dass die Nachricht zur semi-persistenten Ressourcenzuweisung eine semi-persistente Ressource kennzeichnet, wenn der NDI in der Nachricht zur semi-persistenten Ressourcenzuweisung 0 ist.

9. Ressourcenzuweisungsvorrichtung nach Anspruch 8, wobei der PDCCH Prozessor (830) einen Test zur zyklischen Redundanzprüfung (Cyclic Redundancy Check), CRC, an der empfangenen Nachricht mit der SPS C-RNTI durchführt.

10. Ressourcenzuweisungsvorrichtung nach Anspruch 9, wobei der PDCCH Prozessor (830) bestimmt, dass die empfangene Nachricht die Nachricht zur semi-persistenten Ressourcenzuweisung ist, wenn die empfangene Nachricht den CRC-Test besteht.

11. Ressourcenzuweisungsvorrichtung nach Anspruch 8, wobei die Nachricht zur semi-persistenten Ressourcenzuweisung weiterhin eine Ressourcenzuordnungsinformation zu der Ressource zur Sendewiederholung oder der semi-persistenten Ressource umfasst.

12. Ressourcenzuweisungsvorrichtung einer Basisstation in einem drahtlosen Kommunikationssystem, umfassend:
einen Controller für semi-persistente Ressourcen (820; 920) zum Setzen eines Indikators für neue Daten (New Data Indicator), NDI, auf 1, wenn eine Ressource zur Sendewiederholung einem mobilen Endgerät zugewiesen wird, und zum Setzen des NDI auf 0, wenn eine semi-persistente Ressource dem mobilen Endgerät zugewiesen wird;
einen Ressourcenzuweisungsnachrichtengenerator (930) für eine Nachricht zur semi-persistenten Ressourcenzuweisung, die den NDI umfasst, unter Verwendung einer temporären, semi-persistenten Planung-Zellenfunknetzkennung (Semi-Persistent Scheduling Cell Radio Network Temporary Identifier), SPS C-RNTI, des mobilen Endgeräts; und
einen Sendeempfänger (825; 925) zum Senden der Nachricht zur semi-persistenten Ressourcenzuweisung an das mobile Endgerät auf einem physikalischen Downlink-Steuerkanal (Physical Downlink Control Channel), PDCCH.

13. Ressourcenzuweisungsvorrichtung nach Anspruch 12, wobei die Nachricht zur semi-persistenten Ressourcenzuweisung weiterhin einen Code einer zyklischen Redundanzprüfung (Cyclic Redundancy Check), CRC, der mit der SPS C-RNTI berechnet wird, umfasst.

14. Ressourcenzuweisungsvorrichtung nach Anspruch 12, wobei die Nachricht zur semi-persistenten Ressourcenzuweisung weiterhin eine Ressourcenzuordnungsinformation zu der Ressource zur Sendewiederholung oder der semi-persistenten Ressource umfasst.

## Revendications

1. Procédé d'allocation de ressources pour un terminal mobile dans un système de communication sans fil, comprenant:
surveiller un canal physique de commande de liaison descendante, soit Physical Downlink Control Channel, PDCCH,
déterminer, lorsqu'un message de liaison descendante est reçu sur le PDCCH, si le message reçu est un message d'allocation de ressources semi-persistantes en utilisant un identifiant temporaire de réseau radio cellulaire à planification semi-persistante, soit Semi-Persistent Scheduling Cell Radio Network Temporary Identifier, SPS C-RNTI, du terminal mobile;
**caractérisé par** les étapes qui consistent à:
considérer que le message d'allocation de ressources semi-persistantes indique une ressource de retransmission lorsqu'un indicateur de données nouvelles, soit New Data Indicator, NDI, dans le message d'allocation de ressources semi-persistantes est 1; et
considérer que le message d'allocation de ressources semi-persistantes indique une ressource semi-persistante lorsque l'indicateur NDI dans le message d'allocation de ressources semi-persistantes est 0.

2. Procédé d'allocation de ressources selon la revendication 1, dans lequel la détermination si le message reçu est le message d'allocation de ressources semi-persistantes comprend:
effectuer un essai de contrôle de redondance cyclique, soit Cyclic Redundancy Check, CRC, sur le message reçu avec l'identifiant SPS C-RNTI.

3. Procédé d'allocation de ressources selon la revendication 2, dans lequel la détermination si le message reçu est le message d'allocation de ressources semi-persistantes comprend en outre:
déterminer, lorsque le message reçu réussit l'essai de CRC, que le message reçu est le message d'allocation de ressources semi-persistantes.

4. Procédé d'allocation de ressources selon la revendication 1, dans lequel le message d'allocation de ressources semi-persistantes comprend en outre une information d'attribution de ressources sur la ressource de retransmission ou sur la ressource semi-persistante.

5. Procédé d'allocation de ressources pour une station de base dans un système de communication sans fil, comprenant:
régler un indicateur de données nouvelles, soit New Data Indicator, NDI, à 1, lorsqu'une ressource de retransmission est attribuée à un terminal mobile;
régler l'indicateur NDI à 0, lorsqu'une ressource semi-persistante est attribuée au terminal mobile;
générer un message d'allocation de ressources semi-persistantes comprenant l'indicateur NDI en utilisant un identifiant temporaire de réseau radio cellulaire à planification semi-persistante, soit Semi-Persistent Scheduling Cell Radio Network Temporary Identifier, SPS C-RNTI, du terminal mobile; et
transmettre le message d'allocation de ressources semi-persistantes au terminal mobile sur un canal physique de commande de liaison descendante, soit Physical Downlink Control Channel, PDCCH.

6. Procédé d'allocation de ressources selon la revendication 5, dans lequel le message d'allocation de ressources semi-persistantes comprend en outre un code de contrôle de redondance cyclique, soit Cyclic Redundancy Check, CRC, calculé à partir de l'identifiant SPS C-RNTI.

7. Procédé d'allocation de ressources selon la revendication 5, dans lequel le message d'allocation de ressources semi-persistantes comprend en outre une information d'attribution de ressources sur la ressource de retransmission ou sur la ressource semi-persistante.

8. Dispositif d'allocation de ressources d'un terminal mobile dans un système de communication sans fil, comprenant:
un émetteur-récepteur (825; 925) pour recevoir des données;
un processeur de canal physique de commande de liaison descendante, soit Physical Downlink Control Channel, PDCCH, (830) pour surveiller le PDCCH et pour déterminer, lorsqu'un message de liaison descendante est reçu sur le PDCCH, si le message reçu est un message d'allocation de ressources semi-persistantes en utilisant un identifiant temporaire de réseau radio cellulaire à planification semi-persistante, soit Semi-Persistent Scheduling Cell Radio Network Temporary Identifier, SPS C-RNTI, du terminal mobile; et
**caractérisé par**
un contrôleur de ressources semi-persistantes (820; 920) pour considérer que le message d'allocation de ressources semi-persistantes indique une ressource de retransmission lorsqu'un indicateur de données nouvelles, soit New Data Indicator, NDI, dans le message d'allocation de ressources semi-persistantes est 1, et pour considérer que le message d'allocation de ressources semi-persistantes indique une ressource semi-persistante lorsque l'indicateur NDI dans le message d'allocation de ressources semi-persistantes est 0.

9. Dispositif d'allocation de ressources selon la revendication 8, dans lequel le processeur de PDCCH (830) effectue un essai de contrôle de redondance cyclique, soit Cyclic Redundancy Check, CRC, sur le message reçu avec l'identifiant SPS C-RNTI.

10. Dispositif d'allocation de ressources selon la revendication 9, dans lequel le processeur de PDCCH (830) détermine, lorsque le message reçu réussit l'essai de CRC, que le message reçu est le message d'allocation de ressources semi-persistantes.

11. Dispositif d'allocation de ressources selon la revendication 8, dans lequel le message d'allocation de ressources semi-persistantes comprend en outre une information d'attribution de ressources sur la ressource de retransmission ou sur la ressource semi-persistante.

12. Dispositif d'allocation de ressources d'une station de base dans un système de communication sans fil, comprenant:
un contrôleur de ressources semi-persistantes (820; 920) pour régler un indicateur de données nouvelles, soit New Data Indicator, NDI, à 1, lorsqu'une ressource de retransmission est attribuée à un terminal mobile et pour régler l'indicateur NDI à 0, lorsqu'une ressource semi-persistante est attribuée au terminal mobile;
un générateur de messages d'allocation de ressources (930) pour un message d'allocation de ressources semi-persistantes comprenant l'indicateur NDI en utilisant un identifiant temporaire de réseau radio cellulaire à planification semi-persistante, soit Semi-Persistent Scheduling Cell Radio Network Temporary Identifier, SPS C-RNTI, du terminal mobile; et
un émetteur-récepteur (825; 925) pour transmettre le message d'allocation de ressources semi-persistantes au terminal mobile sur un canal physique de commande de liaison descendante, soit Physical Downlink Control Channel, PDCCH.

13. Dispositif d'allocation de ressources selon la revendication 12, dans lequel le message d'allocation de ressources semi-persistantes comprend en outre un code de contrôle de redondance cyclique, soit Cyclic Redundancy Check, CRC, calculé à partir de l'identifiant SPS C-RNTI.

14. Dispositif d'allocation de ressources selon la revendication 12, dans lequel le message d'allocation de ressources semi-persistantes comprend en outre une information d'attribution de ressources sur la ressource de retransmission ou sur la ressource semi-persistante.
